# EUROPÄISCHE PATENTANMELDUNG

(11) **EP 4 300 755 A1**
(43) Veröffentlichungstag der Anmeldung: **03.01.2024**
(21) Anmeldenummer: 22181512.9
(22) Anmeldetag: 28.06.2022
(51) Int. Cl.: H02J 7/00, B25F 5/00

(54) **DIGITALER ZWILLING**

(71) Anmelder: Hilti Aktiengesellschaft, 9494 Schaan (LI)
(72) Erfinder: Goyal, Varnim, 86899 Landsberg am Lech (DE); Mayer, Stefan, 86857 Hurlach (DE); Ali, Bilal Riasat, 86899 Landsberg am Lech (DE)
(74) Vertreter: Hilti Aktiengesellschaft Corporate Intellectual Property

(57) **Zusammenfassung**

Verfahren zum Steuern und Regeln eines Systems enthaltend wenigstens einen Akkumulator als eine erste Systemkomponente mit wenigstens einer Energiespeicherzelle, wenigstens einem ersten Transceiver und wenigstens einem Sensor zum Erfassen wenigstens eines Kennwertes sowie eine zweite Systemkomponente mit wenigstens einen zweiten Transceiver. Mit den Verfahrensschritten:
- Erfassen wenigstens eines ersten und zweiten Kennwertes durch den wenigstens einen Sensor;
- Aussenden der erfassten Kennwerte durch den wenigstens ersten Transceiver an eine Rechenvorrichtung mit einem digitalen Zwilling des wenigstens einen Akkumulators; und
- Ermitteln eines Schwellwertes für wenigstens einen Parameter des Akkumulators durch Einspeisen der erfassten Kennwerte in den digitalen Zwilling zum Simulieren eines zukünftigen Verhaltens und/oder Verlaufs wenigstens eines Parameters.

System zur Durchführung des Verfahrens.

Ladevorrichtung zur Durchführung des Verfahrens.

## Beschreibung

Die vorliegende Erfindung betrifft ein Verfahren zum Steuern und Regeln eines Systems enthaltend wenigstens einen Akkumulator als eine erste Systemkomponente mit wenigstens einer Energiespeicherzelle, wenigstens einem ersten Transceiver und wenigstens einem Sensor zum Erfassen wenigstens eines Kennwertes sowie eine zweite Systemkomponente mit wenigstens einen zweiten Transceiver.

Des Weiteren betrifft die vorliegende Erfindung ein System enthaltend einen Akkumulator sowie eine zweite Systemkomponente, welche wiederlösbar mit dem Akkumulator verbindbar ist, zur Durchführung des Verfahrens.

Darüber hinaus betrifft die vorliegende Erfindung eine Ladevorrichtung zur Durchführung des Verfahrens.

Werkzeugmaschinen, die von einem Akkumulator mit elektrischer Energie versorgt werden können, sind weitestgehend aus dem Stand der Technik bekannt. Der Akkumulator enthält dazu im Wesentlichen eine Vielzahl an Energiespeicherzellen (auch Akku-Zellen genannt), die in einem festen Gehäuse positioniert sind. Mit Hilfe der Energiespeicherzellen kann elektrische Energie von dem Akkumulator gespeichert und für eine Werkzeugmaschine auch bereitgestellt werden.

An einer Seite des Gehäuses des Akkumulators ist dabei eine Schnittstelle vorgesehen, durch die der Akkumulator wiederlösbar entweder mit einer Werkzeugmaschine oder einer Ladevorrichtung verbunden werden kann. Um einen Akkumulator mit elektrischer Energie zu laden, wird der Akkumulator mit der Ladevorrichtung wiederlösbar verbunden. Gemäß dem Stand der Technik weisen die Ladevorrichtungen eine Schnittstelle an einer Seite des Gehäuses der Ladevorrichtung auf, durch welche der Akkumulator mechanisch sowie elektrisch mit der Ladevorrichtung verbunden ist.

Moderne Akkumulator können vielseitig bzw. nahezu universell als Energiequelle mit unterschiedlichsten Werkzeugmaschinen oder andersartigen Vorrichtungen, wie z.B. Staubsauger, Lampen, Messgeräten oder dergleichen, verwendet werden.

Je nach Einsatz eines Akkumulators als Energiequelle an einer bestimmten Vorrichtung kann die spezifische Belastung oder Beanspruchung des Akkumulators dabei gänzlich unterschiedlich sein.

So ist es beispielsweise möglich, dass ein Akkumulator als Energiequelle für eine leistungsstarke Werkzeugmaschine (z.B. ein akkubetriebener Meißelhammer) relativ viel Energie (d.h. eine hohe Stromstärke) für relativ kurze Zeit (d.h. wenige Sekunden) zur Verfügung stellen muss. Ein Akkumulator, der jedoch als Energiequelle für eine (Baustellen-)Lampe dient, muss hingegen weniger Energie (d.h. eine niedrige Stromstärke) für einen längeren Zeitraum (d.h. mehrere Minuten) bereitstellen.

Darüber hinaus kann in Abhängigkeit des Einsatzgebietes des jeweiligen Akkumulators als Energiequelle die Anzahl der Ladezyklen, die Ladedauer, die von dem Akkumulator aufgenommene oder abgegebene Energie, die mechanische oder thermische Beanspruchung, etc. gänzlich unterschiedlich sein.

Mögliche Beschädigungen, einzelne Fehlfunktionen oder auch ein Komplettausfall eines Akkumulators sind daher auf ganz unterschiedliche Gründe zurückzuführen. Hierzu ist oftmals eine ausführliche Analyse des jeweils betroffenen Akkumulators notwendig.

Es ist damit Aufgabe der vorliegenden Erfindung das vorstehend beschriebene Problem zu lösen.

Die Aufgabe wird gelöst durch den Gegenstand des unabhängigen Patentanspruchs 1, 5 und 9. Vorteilhafte Ausführungsformen des erfindungsgemäßen Gegenstands sind in den abhängigen Patentansprüchen enthalten.

Die Aufgabe wird insbesondere gelöst durch ein Verfahren zum Steuern und Regeln eines Systems enthaltend wenigstens einen Akkumulator als eine erste Systemkomponente mit wenigstens einer Energiespeicherzelle, wenigstens einem ersten Transceiver und wenigstens einem Sensor zum Erfassen wenigstens eines Kennwertes sowie eine zweite Systemkomponente mit wenigstens einen zweiten Transceiver.

Erfindungsgemäß sind die Verfahrensschritte vorgesehen
- Erfassen wenigstens eines ersten und zweiten Kennwertes durch den wenigstens einen Sensor;
- Aussenden der erfassten Kennwerte durch den wenigstens ersten Transceiver an eine Rechenvorrichtung mit einem digitalen Zwilling des wenigstens einen Akkumulators; und
- Ermitteln eines Schwellwertes für wenigstens einen Parameter des Akkumulators durch Einspeisen der erfassten Kennwerte in den digitalen Zwilling zum Simulieren eines zukünftigen Verhaltens und/oder Verlaufs wenigstens eines Parameters.

Entsprechend einer alternativen Ausführungsform kann es möglich sein, dass das Erfassen des zweiten Kennwertes nach Ablauf einer vorbestimmten Zeitdauer ab dem Erfassen des ersten Kennwertes erfolgt. Die Zeitdauer kann dabei mehrere Sekunden oder aber mehrere Minuten betragen, insbesondere 10 Sekunden bis zu 10 Minuten.

Gemäß einer alternativen Ausführungsform kann es möglich sein, dass das Einstellen des wenigstens einen Akkumulators von einem ersten Betriebszustand in einen zweiten Betriebszustand enthalten ist, wenn wenigstens ein Parameter des Akkumulators einen vorbestimmten Schwellwert erreicht oder wenn wenigstens ein Parameter des Akkumulators den ermittelten Schwellwert erreicht.

Entsprechend einer alternativen Ausführungsform kann es möglich sein, dass das Aussenden wenigstens eines Signals von der Ladevorrichtung an den Akkumulator enthalten ist, wenn wenigstens ein Parameter des Akkumulators einen vorbestimmten Schwellwert erreicht oder wenn wenigstens ein Parameter des Akkumulators den ermittelten Schwellwert erreicht.

Die Aufgabe wird weiterhin und insbesondere gelöst durch ein System enthaltend einen Akkumulator sowie eine zweite Systemkomponente, welche wiederlösbar mit dem Akkumulator verbindbar ist, zur Durchführung des Verfahrens.

Erfindungsgemäß ist vorgesehen, dass der wenigstens eine Akkumulator wenigstens einen ersten Transceiver sowie wenigstens einen Sensor zum Erfassen wenigstens eines Kennwertes und die zweite Systemkomponente wenigstens einen zweiten Transceiver enthält und eine Rechenvorrichtung mit einem digitalen Zwilling des wenigstens einen Akkumulators enthalten ist.

Gemäß einer alternativen Ausführungsform kann es möglich sein, dass die Rechenvorrichtung mit dem digitalen Zwilling des wenigstens einen Akkumulators ein Bestandteil der zweiten Systemkomponente ist.

Entsprechend einer alternativen Ausführungsform kann es möglich sein, dass die Rechenvorrichtung mit dem digitalen Zwilling des wenigstens einen Akkumulators als separate Systemkomponente ausgestaltet ist.

Gemäß einer alternativen Ausführungsform kann es möglich sein, dass die zweite Systemkomponente als Ladevorrichtung oder Werkzeugmaschine ausgestaltet ist.

Des Weiteren wird die Aufgabe insbesondere gelöst durch eine Ladevorrichtung zur Durchführung des erfindungsgemäßen Verfahrens.

Erfindungsgemäß ist vorgesehen, dass die Ladevorrichtung wenigstens einen zweiten Transceiver und eine Rechenvorrichtung mit einem digitalen Zwilling wenigstens eines Akkumulators enthält.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine gemäß einer ersten Ausführungsform und einen mit der Werkzeugmaschine verbundenen Akkumulator gemäß einer ersten Ausführungsform; und
- Figur 2: eine schematische Seitenansicht auf die Ladevorrichtung gemäß einer ersten Ausführungsform und einen mit der Werkzeugmaschine verbundenen Akkumulator gemäß einer zweiten Ausführungsform.

### Ausführungsbeispiele:

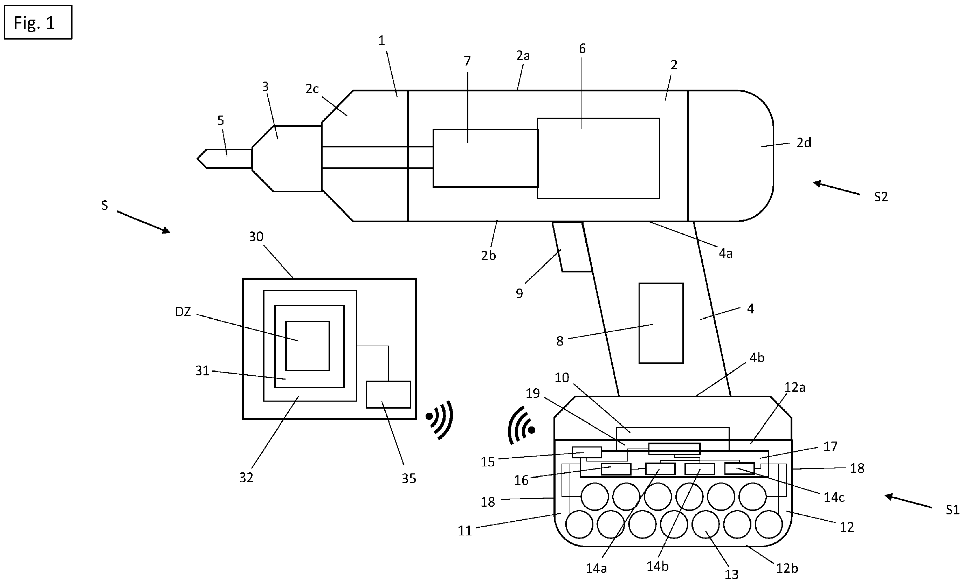

Figur 1 zeigt eine Werkzeugmaschine 1 und einen Akkumulator 11 gemäß einer beispielhaften Ausführungsform. Die Werkzeugmaschine 1 und der Akkumulator 11 bilden ein System S gemäß einer ersten Ausführungsform.

Die Werkzeugmaschine 1 ist in der gezeigten Ausführungsform als Schrauber ausgestaltet. Alternativ kann die Werkzeugmaschine 1 auch als Bohrmaschine, einen Bohrhammer, eine Säge, ein Schleifgerät oder dergleichen ausgestaltet sein.

Wie in Figur 1 angedeutet enthält die als Schrauber ausgestaltete Werkzeugmaschine 1 im Wesentlichen ein Werkzeugmaschinengehäuse 2 mit einer Werkzeugaufnahme 3 und einem Handgriff 4. Die Werkzeugaufnahme 3 dient zum Aufnehmen und Halten eines Werkzeugs 5. Bei dem Werkzeug 5 handelt es sich in dem vorliegenden Beispiel um einen Schrauber-Bit. Alternativ kann das Werkzeug 5 auch als Bohrer ausgestaltet sein.

Im Inneren des Werkzeugmaschinengehäuses 2 ist unter anderem ein Antrieb 6, ein Getriebe 7 und eine Steuereinheit 8 vorgesehen. Der Antrieb 6 ist dabei als bürstenloser Elektromotor ausgestaltet.

Die Steuereinheit 8 regelt und steuert die Funktionen und das Verhalten der Werkzeugmaschine 1 und insbesondere des Antriebs 6.

Der Handgriff 4 enthält wiederum einen Betätigungsschalter 9, ein oberes Ende 4a und ein unteres Ende 4b. Der Betätigungsschalter 9 ist mit der Steuereinheit 8 verbunden, sodass ein Betätigen des Betätigungsschalters 9 zu einer Aktivierung des Antriebs 6 bzw. der Werkzeugmaschine 1 führt. Wie ebenfalls in Figur 1 gezeigt, ist der Antrieb 6, das Getriebe 7 und die Werkzeugaufnahme 3 so zueinander angeordnet, dass ein in dem Antrieb 6 erzeugtes Drehmoment über das Getriebe 7 auf die Werkzeugaufnahme 3 und das Werkzeug 5 übertragen werden kann.

Das Werkzeugmaschinengehäuse 2 weist des Weiteren eine Oberseite 2a, eine Unterseite 2b, ein vorderes Ende 2c und ein hinteres Ende 2d auf. An dem vorderen Ende 2c ist die Werkzeugaufnahme 3 positioniert. An der Unterseite 2b und in der Nähe des hinteren Endes 2d des Werkzeugmaschinengehäuses 2 ist das obere Ende 4a des Handgriffs 4 befestigt. An dem unteren Ende 4b des Handgriffs 4 ist eine Werkzeugmaschinenschnittstelle 10 positioniert. Die Werkzeugmaschinenschnittstelle 10 dient zum wiederlösbaren Verbinden der Werkzeugmaschine 1 mit dem Akkumulator 11.

Der in dem Ausführungsbeispiel beschriebene Akkumulator 11 kann insbesondere als Energiespeichervorrichtung bzw. elektrische Energiequelle für die Werkzeugmaschine 1 dienen.

Der Akkumulator 11 enthält dabei im Wesentlichen ein Akku-Gehäuse 12, eine Anzahl an Energiespeicherzellen 13, einen ersten, zweiten und dritten Sensor 14a, 14b, 14c einen ersten Transceiver 15, eine Speichervorrichtung 16 sowie eine Steuerungseinrichtung 17. Die Energiespeicherzellen 13 können auch als Akku-Zellen bezeichnet werden.

Die Speichervorrichtung 16 ist im Inneren des Akku-Gehäuses 12 positioniert und dient zu Speichern und Bereitstellen von Daten und Informationen.

Die Sensoren 14a, 14b, 14c dienen generell zum Erfassen von Kennwerten des Akkumulators 11 oder einzelner Bestandteile des Akkumulators 11. Der Kennwert kann auch als Parameter oder Kenngröße bezeichnet werden. Zu den Kennwerten des Akkumulators 11 kann unter anderem Stromspannung, Stromstärke, elektrischer Widerstand, Temperatur, Luftfeuchtigkeit oder dergleichen zählen.

Bei dem ersten Sensor 14a handelt es sich um einen Sensor zum Erfassen eines Stromstärkewertes, welcher auch als Strommessvorrichtung, Stromerfassungsvorrichtung, Strommesser oder Amperemeter bezeichnet werden kann. Der erste Sensor 14a ist dabei so im Inneren des Akku-Gehäuses 12 positioniert, dass die Stromstärkewerte von den Energiespeicherzellen 13 erfasst werden können. Der erste Sensor 14a ist mit der Speichervorrichtung 16 sowie mit der Steuerungseinrichtung 17 verbunden, damit die erfassten Werte gespeichert und/oder verarbeitet werden können. Es können mehr als ein einziger Sensor zum Erfassen eines Stromstärkewertes vorgesehen sein, sodass der Stromstärkewert einer jeden Energiespeicherzelle 13 erfasst werden kann.

Bei dem zweiten Sensor 14b handelt es sich um einen Sensor zum Erfassen eines Stromspannungswertes, welcher auch als Spannungsmessvorrichtung, Spannungsmesser oder Voltmeter bezeichnet werden kann. Der zweite Sensor 14b ist dabei so im Inneren des Akku-Gehäuses 12 positioniert, dass die Stromspannungswerte von den Energiespeicherzellen 13 erfasst werden können. Der zweite Sensor 14b ist mit der Speichervorrichtung 16 sowie mit der Steuerungseinrichtung 17 verbunden, damit die erfassten Werte gespeichert und/oder verarbeitet werden können. Es können mehr als ein einziger Sensor zum Erfassen eines Stromspannungswertes vorgesehen sein, sodass der Stromspannungswert einer jeden Energiespeicherzelle 13 erfasst werden kann.

Bei dem dritten Sensor 14c handelt es sich um einen Sensor zum Erfassen eines Temperaturwertes, welcher auch als Temperaturerfassungsvorrichtung, Temperaturmesser oder Thermometer bezeichnet werden kann. Der dritte Sensor 14c ist dabei so im Inneren des Akku-Gehäuses 12 positioniert, dass die Temperaturwerte von den Energiespeicherzellen 13 erfasst werden können. Der dritte Sensor 14c ist mit der Speichervorrichtung 16 sowie mit der Steuerungseinrichtung 17 verbunden, damit die erfassten Werte gespeichert und/oder verarbeitet werden können. Es können mehr als ein einziger Sensor zum Erfassen eines Temperaturwertes vorgesehen sein, sodass der Temperaturwert einer jeden Energiespeicherzelle 13 erfasst werden kann.

Gemäß einer alternativen Ausführungsform des Akkumulators 11 können auch mehr oder weniger als drei Sensoren 14a, 14b, 14c vorgesehen sein.

Der erste Transceiver 15 dient zum Aussenden und Empfangen von Signalen und Daten. Der Transceiver 15 kann auch als Sendeempfänger bezeichnet werden. In Kombination bzw. Zusammenspiel mit einem weiteren Transceiver können mit Hilfe des ersten Transceivers 15 Daten und Informationen von dem Akkumulator 11 zu einer anderen Vorrichtung bzw. Gerät gesendet oder auch von diesem empfangen werden. In dem vorliegenden Ausführungsbeispiel ist der erste Transceiver 15 auf Basis der Bluetooth-Technologie ausgestaltet. Es ist jedoch auch möglich, dass der Transceiver 15 auf einer anderen geeigneten drahtlosen Datenübertragungstechnologie, wie z.B. WLAN, ZigBee, NFC, Wibree oder WiMAX im Radiofrequenzbereich, basiert. Der erste Transceiver 15 kann dabei Bestandteil der Steuerungseinrichtung 17 des Akkumulators 11 sein. Gemäß eines alternativen Ausführungsbeispiels kann der erste Transceiver 15 auch auf Basis einer drahtgebundenen Datenübertragungstechnologie ausgestaltet sein.

Das Akku-Gehäuse 12 enthält wiederum eine Oberseite 12a, eine Unterseite 12b sowie vier Seitenwände 18. Wie in Figur 1 ersichtlich ist an der Oberseite 12a des Akku-Gehäuses 12 eine Akku-Schnittstelle 19 angeordnet. Sowohl die Energiespeicherzellen 13 als auch die Steuerungseinrichtung 17 ist im Inneren des Akku-Gehäuses 12 positioniert. Die Steuerungseinrichtung 17 dient zum Steuern und Regeln der Funktionen und des Verhaltens des Akkumulators 11. Zu den Funktionen des Akkumulators 11 zählt unter anderen die quantitative Aufnahme sowie Abgabe an elektrischer Energie zu bzw. von den Energiespeicherzellen 13. Wie ebenfalls in Figur 1 angedeutet ist die Steuerungseinrichtung 17 mit der Akku-Schnittstelle 19 verbunden. Des Weiteren ist die Steuerungseinrichtung 17 mit den einzelnen Energiespeicherzellen 13 verbunden, sodass elektrische Energie von und zu den Energiespeicherzellen 13 gelangen kann. Die an der Oberseite 12a des Akku-Gehäuses 12 angeordnete Akku-Schnittstelle 19 dient zum wiederlösbaren Verbinden des Akkumulators 11 mit der Werkzeugmaschinenschnittstelle 10 der Werkzeugmaschine 1, sodass, wenn sich die Werkzeugmaschine 1 und der Akkumulator 11 in einem verbundenen Zustand befinden, elektrische Energie von den Energiespeicherzellen 13 des Akkumulators 11 zu den Verbrauchern (d.h. Antrieb und Steuereinheit) der Werkzeugmaschine 1 gelangen kann.

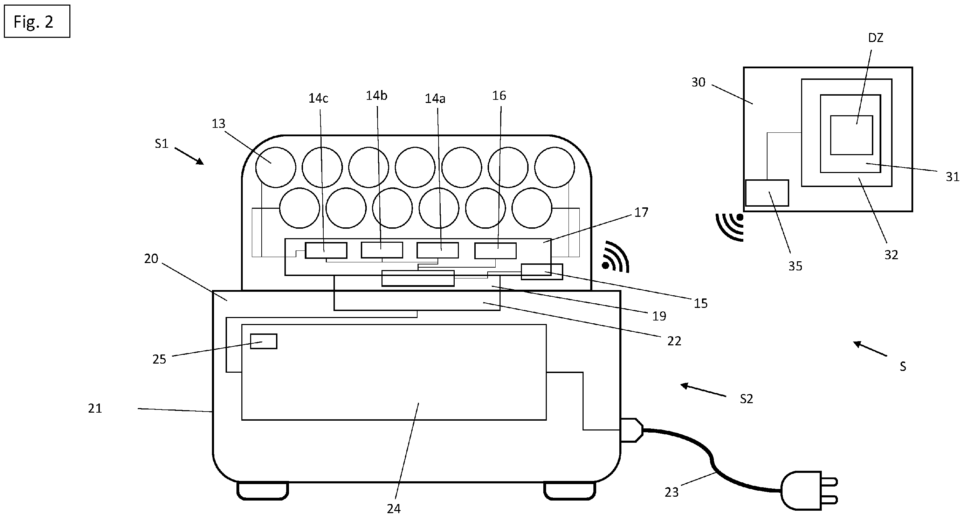

Figur 2 zeigt eine erfindungsgemäße Ladevorrichtung 20 gemäß einer beispielhaften Ausführungsform und den Akkumulator 11. Die Ladevorrichtung 20 und der Akkumulator 11 bilden ein System S gemäß einer zweiten Ausführungsform.

Die Ladevorrichtung 20 dient zum Laden eines mit der Ladevorrichtung 20 verbindbaren Akkumulators 11 mit elektrischer Energie.

Wie ebenfalls in Figur 1 gezeigt enthält die Ladevorrichtung 20 ein Lader-Gehäuse 21 mit einer Lader-Schnittstelle 22 und ein Stromkabel 23. Im Inneren des Lader-Gehäuses 21 ist eine Steuervorrichtung 24 und ein zweiter Transceiver 25 positioniert.

Das Stromkabel 23 weist einen Stecker auf 23a, mit dem die Ladevorrichtung wiederlösbar mit einer Netzstromquelle verbindbar ist. Die Netzstromquelle ist in den Figuren nicht gezeigt.

Der zweite Transceiver 25 dient zum Aussenden und Empfangen von Signalen und Daten. In Kombination bzw. Zusammenspiel mit dem ersten Transceiver 15 können mit Hilfe des zweiten Transceivers 25 Daten und Informationen zwischen der Ladevorrichtung 20 und dem Akkumulator 11 ausgetauscht werden. Der erste und zweite Transceiver 15, 25 ist hierzu korrespondierend bzw. in Form einer korrespondierenden Datenübertragungstechnologie ausgestaltet. In dem vorliegenden Ausführungsbeispiel ist auch der zweite Transceiver 25 auf Basis der Bluetooth-Technologie ausgestaltet. Es ist jedoch auch möglich, dass der Transceiver 25 auf einer anderen geeigneten drahtlosen Datenübertragungstechnologie, wie z.B. WLAN, ZigBee, NFC, Wibree oder WiMAX im Radiofrequenzbereich, basiert. Der zweite Transceiver 25 kann dabei Bestandteil der Steuervorrichtung 24 der Ladevorrichtung 20 sein. Gemäß eines alternativen Ausführungsbeispiels kann auch der zweite Transceiver 25 auch auf Basis einer drahtgebundenen Datenübertragungstechnologie ausgestaltet sein.

Nachfolgend wird das Verfahren zum Steuern und Regeln des erfindungsgemäßen Systems S beschrieben. Entsprechend einer ersten beispielhaften Ausführungsform enthält das System S eine erste und zweite Systemkomponente S1, S2. Die erste Systemkomponente S1 ist in Form des Akkumulators 11 und die zweite Systemkomponente S2 ist in Form der Ladevorrichtung 20 ausgestaltet. Alternativ kann das System auch mehr als zwei Systemkomponenten S1, S2 enthalten. Des Weiteren ist auch möglich, dass gemäß eines weiteren Ausführungsbeispiels die zweite Systemkomponente S2 als Werkzeugmaschine 1 ausgestaltet ist.

Zur Durchführung des erfindungsgemäßen Verfahrens zum Steuern und Regeln des beispielhaften Systems S bestehend aus der Ladevorrichtung 20 und dem Akkumulator 11 werden mit Hilfe eines Sensors 14a, 14b, 14c Kennwerte des Akkumulators 11 erfasst. Es wird dabei wenigstens ein erster und zweiter Kennwert KW1, KW2 des Akkumulators 11 erfasst. Der erste Sensor 14a erfasst somit einen ersten und zweiten Stromstärkewert SSW1, SSW2 der Energiespeicherzellen 13. Die erfassten Stromstärkewerte werden von dem Sensor 14a, 14b, 14c an den ersten Transceiver 15 des Akkumulators 11 übermittelt. Der erste Transceiver 15 sendet anschließend die erfassten Stromstärkewerte an den zweiten Transceiver 15 der Ladevorrichtung 20. Der zweite Transceiver 25 der Ladevorrichtung 20 sendet die erfassten Stromstärkewerte an eine Rechenvorrichtung 30. Die Rechenvorrichtung 30 ist in einem ersten Ausführungsbeispiel als eigenständige Vorrichtung ausgestaltet. Wie nachfolgend noch beschrieben ist es jedoch auch gemäß einem weiteren Ausführungsbeispiel möglich, dass die Rechenvorrichtung 30 als Bestandteil der Ladevorrichtung 20, des Akkumulators 11 oder der Werkzeugmaschine 1 ausgestaltet ist.

Die Rechenvorrichtung 30 dient unter anderem zum Empfangen, Speichern und Bearbeiten von Daten und Informationen. Die Rechenvorrichtung 30 kann auch als Rechenautomat, Computer, Datenverarbeitungsanlage oder dergleichen bezeichnet werden und enthält im Wesentlichen eine Speichereinrichtung 31, eine Steuerung 32 und einen dritten Transceiver 35. Die Speichereinrichtung 31 dient zum Speichern sowie zum Bereitstellen von Daten und Informationen.

Gemäß dem vorliegenden Ausführungsbeispiel enthält die Speichereinrichtung 31 einen digitalen Zwilling DZ des Akkumulators 11. Der digitale Zwilling dient insbesondere zum Simulieren eines zukünftigen Verhaltens und/oder Verlaufs wenigstens eines Parameters des Akkumulators 11

Als digitaler Zwilling DZ ist in diesem Zusammenhang eine digitale Repräsentanz des Akkumulators 11 in einer digitalen Umgebung zu verstehen. Der digitale Zwilling DZ ermöglichen dabei einen übergreifenden Datenaustausch und ist mehr als eine reine Datensammlung zu verstehen, sondern bestehen aus einem Modell oder auch mehreren Modellen des repräsentierten Akkumulators 11. Der digitale Zwilling DZ kann zusätzlich Simulationen, Algorithmen, Funktionen und Services enthalten, die Eigenschaften oder Verhalten des repräsentierten Akkumulators 11 beschreiben, beeinflussen, oder Dienste bzw. Funktionen darüber anbieten.

Mit Hilfe des in der Steuerung 32 der Rechenvorrichtung 30 gespeicherten Algorithmus wird ein Schwellwert für einen Parameter des Akkumulators 11 ermittelt. Hierzu werden die erfassten und übermittelten Kennwerte des Akkumulators 11 in den digitalen Zwilling DZ eingespeist. Durch die Verwendung des digitalen Zwillings DZ kann dann ein zukünftiges Verhalten bzw. ein zukünftiger Verlauf der Parameter für den Akkumulator 11 simuliert werden.

### Bezuaszeichen

- 1: Werkzeugmaschine
- 2: Werkzeugmaschinengehäuse
- 2a: Oberseite des Werkzeugmaschinengehäuses
- 2b: Unterseite des Werkzeugmaschinengehäuses
- 2c: vorderes Ende des Werkzeugmaschinengehäuses
- 2d: hinteres Ende des Werkzeugmaschinengehäuses
- 3: Werkzeugaufnahme
- 4: Handgriff
- 4a: oberes Ende des Handgriffs
- 4b: unteres Ende des Handgriffs
- 5: Werkzeug
- 6: Antrieb
- 7: Getriebe
- 8: Steuereinheit der Werkzeugmaschine
- 9: Betätigungsschalter
- 10: Werkzeugmaschinenschnittstelle
- 11: Akkumulator
- 12: Akku-Gehäuse
- 12a: Oberseite des Akku-Gehäuses
- 12b: Unterseite des Akku-Gehäuses
- 13: Energiespeicherzelle
- 14a: erster Sensor
- 14b: zweiter Sensor
- 14c: dritter Sensor
- 15: erster Transceiver
- 16: Speichervorrichtung
- 17: Steuerungseinrichtung
- 18: Seitenwände des Akkumulators
- 19: Akku-Schnittstelle
- 20: Ladevorrichtung
- 21: Lader-Gehäuse
- 22: Lader-Schnittstelle
- 23: Stromkabel
- 24: Steuervorrichtung der Ladevorrichtung
- 25: zweiter Transceiver
- 30: Rechenvorrichtung
- 31: Speichereinrichtung der Rechenvorrichtung
- 32: Steuerung der Rechenvorrichtung
- 35: dritter Transceiver

- S: System
- S1: erste Systemkomponente
- S2: zweite Systemkomponente
- DZ: digitaler Zwilling
- KW1: erster Kennwert
- KW2: zweiter Kennwert

## Patentansprüche

1. Verfahren zum Steuern und Regeln eines Systems (S) enthaltend wenigstens einen Akkumulator (11) als eine erste Systemkomponente (S1) mit wenigstens einer Energiespeicherzelle (13), wenigstens einem ersten Transceiver (15) und wenigstens einem Sensor (14a, 14b, 14c) zum Erfassen wenigstens eines Kennwertes (KW) sowie eine zweite Systemkomponente (S2) mit wenigstens einen zweiten Transceiver (25) **gekennzeichnet durch** die Verfahrensschritte
- Erfassen wenigstens eines ersten und zweiten Kennwertes (KW1, KW2) durch den wenigstens einen Sensor (14a, 14b, 14c);
- Aussenden der erfassten Kennwerte durch den wenigstens ersten Transceiver (15) an eine Rechenvorrichtung (30) mit einem digitalen Zwilling (DZ) des wenigstens einen Akkumulators (11); und
- Ermitteln eines Schwellwertes für wenigstens einen Parameter des Akkumulators (11) durch Einspeisen der erfassten Kennwerte (KW1, KW2) in den digitalen Zwilling (DZ) zum Simulieren eines zukünftigen Verhaltens und/oder Verlaufs wenigstens eines Parameters.

2. Verfahren nach Anspruch 1,
**dadurch gekennzeichnet, dass** das Erfassen des zweiten Kennwertes (KW2) nach Ablauf einer vorbestimmten Zeitdauer ab dem Erfassen des ersten Kennwertes (KW1) erfolgt.

3. Verfahren nach Anspruch 1 oder 2,
**gekennzeichnet durch** den Verfahrensschritt
- Einstellen des wenigstens einen Akkumulators (11) von einem ersten Betriebszustand in einen zweiten Betriebszustand, wenn wenigstens ein Parameter des Akkumulators (11) einen vorbestimmten Schwellwert erreicht oder wenn wenigstens ein Parameter des Akkumulators (11) den ermittelten Schwellwert erreicht.

4. Verfahren nach wenigstens einem der Ansprüche 1 bis 3,
**gekennzeichnet durch** den Verfahrensschritt
- Aussenden wenigstens eines Signals von der zweiten Systemkomponente (S2) an den Akkumulator (11), wenn wenigstens ein Parameter des Akkumulators (11) einen vorbestimmten Schwellwert erreicht oder wenn wenigstens ein Parameter des Akkumulators (11) den ermittelten Schwellwert erreicht.

5. System (S) enthaltend einen Akkumulator (11) sowie eine zweite Systemkomponente (S2), welche wiederlösbar mit dem Akkumulator (11) verbindbar ist, zur Durchführung des Verfahrens nach Anspruch 1,
**dadurch gekennzeichnet, dass** der wenigstens eine Akkumulator (11) wenigstens einen ersten Transceiver (15) sowie wenigstens einen Sensor (14a, 14b, 14c) zum Erfassen wenigstens eines Kennwertes (KW1, KW2) und die zweite Systemkomponente (S2) wenigstens einen zweiten Transceiver (25) enthält und eine Rechenvorrichtung (30) mit einem digitalen Zwilling (DZ) des wenigstens einen Akkumulators (11) enthalten ist.

6. System (S) nach Anspruch 5,
**dadurch gekennzeichnet, dass** die Rechenvorrichtung (30) mit dem digitalen Zwilling (DZ) des wenigstens einen Akkumulators (11) ein Bestandteil der zweiten Systemkomponente (S2) ist.

7. System (S) nach Anspruch 5 oder 6,
**dadurch gekennzeichnet, dass** die Rechenvorrichtung (30) mit dem digitalen Zwilling (DZ) des wenigstens einen Akkumulators (11) als separate Systemkomponente ist.

8. System (S) nach wenigsten einem der Ansprüche 5 bis 7,
**dadurch gekennzeichnet, dass** die zweite Systemkomponente (S2) als Ladevorrichtung (20) oder Werkzeugmaschine (1) ausgestaltet ist.

9. Ladevorrichtung (20) zur Durchführung des Verfahrens nach Anspruch 1,
**dadurch gekennzeichnet, dass** die Ladevorrichtung (20) wenigstens einen zweiten Transceiver (25) und eine Rechenvorrichtung (30) mit einem digitalen Zwilling (DZ) wenigstens eines Akkumulators (11) enthält.
